(19) **Europäisches Patentamt**
**European Patent Office**
**Office européen des brevets**

(11) **EP 1 974 326 B1**

(12) **EUROPEAN PATENT SPECIFICATION**

(45) Date of publication and mention
of the grant of the patent:
**25.10.2017 Bulletin 2017/43**

(51) Int Cl.:
**G06T 7/20** $^{(2017.01)}$     **G08B 13/196** $^{(2006.01)}$

(21) Application number: **07704918.7**

(86) International application number:
**PCT/GB2007/000129**

(22) Date of filing: **17.01.2007**

(87) International publication number:
**WO 2007/083104 (26.07.2007 Gazette 2007/30)**

(54) **VIDEO SIGNAL ANALYSIS**

VIDEOSIGNALANALYSE

ANALYSE DE SIGNAUX VIDÉO

(84) Designated Contracting States:
**AT BE BG CH CY CZ DE DK EE ES FI FR GB GR
HU IE IS IT LI LT LU LV MC NL PL PT RO SE SI
SK TR**

(30) Priority: **20.01.2006 EP 06250322**

(43) Date of publication of application:
**01.10.2008 Bulletin 2008/40**

(73) Proprietor: **BRITISH TELECOMMUNICATIONS
public limited company
London
EC1A 7AJ (GB)**

(72) Inventors:
• **CAVALLARO, Andrea
London
Greater London E3 5NZ (GB)**
• **XU, Li-Qun
Ipswich
Suffolk IP5 2GT (GB)**

(74) Representative: **Lidbetter, Timothy Guy Edwin et
al
BT Intellectual Property Department
Ground Floor
BT Faraday Building,
1 Knightrider Street
London EC4V 5BT (GB)**

(56) References cited:
**WO-A-03/001467**

• **AKUTSU A ET AL: "VIDEO INDEXING USING
MOTION VECTORS" PROCEEDINGS OF THE
SPIE, SPIE, BELLINGHAM, VA, US, vol. 1818, no.
PART 3, 18 November 1992 (1992-11-18), pages
1522-1530, XP000671350 ISSN: 0277-786X**
• **MAURIN B ET AL: "Tracking all traffic: computer
vision algorithms for monitoring vehicles,
individuals, and crowds" IEEE ROBOTICS &
AUTOMATION MAGAZINE IEEE USA, vol. 12, no.
1, March 2005 (2005-03), pages 29-36,
XP002389414 ISSN: 1070-9932**
• **HAIYAN SHU ET AL: "A new scene change feature
for video transcoding" IEEE INTERNATIONAL
SYMPOSIUM ON CIRCUITS AND SYSTEMS
(ISCAS) (IEEE CAT. NO. 05CH37618) IEEE
PISCATAWAY, NJ, USA, vol. 5, 2005, pages
4582-4585 Vol., XP002389415 ISBN:
0-7803-8834-8**
• **EL-QAWASMEH E ET AL: "A SURVEY OF
DIGITAL VIDEO SHOT BOUNDARY DETECTION
ALGORITHMS" PROCEEDINGS OF THE IASTED
INTERNATIONAL CONFERENCE APPLIED
INFORMATICS. INTERNATIONAL SYMPOSIUM
ON SOFTWARE ENGINEERING, DATABASES
AND APPLICATIONS, 2001, pages 497-502,
XP009042081**

**Description**

The present invention is concerned with analysis of video signals.

**Background to the Invention**

With the widespread deployment of IP-CCTV system for security, safety, and information gathering purposes, vast amount of video data are being produced on a daily basis. For instance, Heathrow airport alone is equipped with over 6000 surveillance cameras. To tackle the overwhelming amount of video data, there is urgent need to design intelligent video analysis/understanding algorithms such that the incoming video streams are effectively "filtered" and only pertinent object / event / behaviours information concerning particular domain applications are passed on to human operators for operational or decision making purposes, including abnormal events detection, scene activities summarisation, browsing, and understanding etc.

Video data captured by surveillance cameras are in the form of digital images that are represented by sets of unrelated pixels. Valuable knowledge is often buried in such unstructured data. To make better use of images and image sequences, the visual information should be represented in a more structured form. One intuitive solution to the problem of visual information management is content-based representation. Content-based representations encapsulate the visually meaningful portions of the image data. Such a representation is easier to understand and manipulate both by computers and by humans. Content-based representation is usually in terms of video objects (e.g., people and vehicles) that are detected and then tracked. However, this representation model often fails when analysing crowded scenes or when a camera is not favourably positioned (i.e., not a bird's-eye view) due to physical site constraints. Traditional image processing algorithms such as background subtraction and blob tracking would not be of much help in analysing such scenes. There is no literature covering this kind of sequences, except when 3D information is used to disambiguate occlusions [7].

Other forms of representations therefore need to be investigated to enable the detection of interesting events using monocular video. In this specification, we refer to the process of detecting interesting events in video as *surveillance scene change detection (SSCD)*. SSCD aims at detecting relevant changes in the incoming video in order to alert an operator to intervene and/or for the system to automatically index the video database. Moreover, the extraction of key-frames to represent an interesting event is useful for surveillance video summarisation.

Work on scene change detection (SCD) is traditionally aimed at analysis of broadcast videos, which are normally filmed according to a script and post-produced in studios. SCD is the process of finding transitions between video scenes bearing distinctive semantic meanings. Scenes are groups of shots that exhibit some consistency in the context of the plot of the video. Shots, or camera breaks, are sets of contiguous frames between editing effects such as cuts, fades, wipes. Scenes may comprise many different shots or alternate randomly between a few shots.

The surveillance scene change detection (SSCD), however, needs to be looked at from a different perspective. SSCD is dependent on both the complexity of the visual scene and the surveillance task undertaken. As opposed to SCD, the objective of SSCD is different: the physical scene setting captured (e.g., with a static camera) is always the same, but the video content undergoes continuous changes due to fast/slow dynamic object movements as well as illumination variations.

Previous work on SSCD is mainly based on an object-centred analysis paradigm, assuming that object detection and tracking is possible and/or that specific visual event can be well defined. In general, events are detected in simple scenes populated with few objects and characterised by very clear semantics (e.g., remove / deposit an object from/into the scene [9], open / close a drawer [4]). Other works address specific environments with known semantics, such as a nursing home [6] by Hauptmann *et al*. In their work, object-based analysis is performed in low-density scenes, which contain clear and predefined semantics, aiming first at identifying individuals (the elders) and then at characterising their activities. Stringa and Regazzoni presented a system that detects a permanent change in a scene, or the left baggage in a waiting room of a train station [9]. Moreover, the work shows the trend of system performance degradation when scenes become more crowded or complex, leading to inevitable failure. In [2] Amer *et al.* investigated content independent event recognition, though the scene contains only a few objects and the system is based on tracking. Finally, WO 03/001467 A (WESPOT AB; BENCKERT, HENRIK; ELFVING, MATS; NILSSON-STIG, PER; SJOE, E) 3 January 2003 (2003-01-03) discloses a method of movement detection in an monitoring area by combining background subtraction and frame differences. To overcome the limits of the object-based representation in complex scenes, a number of studies address the dynamic scene analysis problem based on pixel-level activity. In [8] Ng and Gong link the low-level pixel-based representation to domain semantics. However, the algorithm is demonstrated on scenes containing one person only. Other works address the problem of activity-based surveillance in video at pixel-level without consideration of specific semantics [5, 11]. In [11] Xiang *et al.* find blob-level events for behaviour profiling without using segmentation and clustering. The approach aims at finding temporal events based on the local intensity temporal history of pixels that are then clustered into groups of adjacent pixels. The number of meaningful events and their locations in the scene are automatically learned and detected (as opposed to manual labelling). However, only low-density scenes are used and events with clear semantics, such as customers picking up an object, a shopkeeper receiving money at the till, are detected. The work in [5] is the closest to what we want to achieve, i.e. to find surveillance scene changes based on low-level information. However, that work is aimed at aircraft docking activities, which means that the semantics associated to the scene are very clear. Moreover, the measure adopted for event detection is based on the assumption that an activity always takes place in the same region of the image (i.e. the scene is highly structured).

In summary, the works found in literature that are based on low-level features are either addressing a well-constrained situation (e.g., airport tarmac) or aiming at detecting well-defined events that can be modelled. The current state-of-the-art has only started to address the problem of crowded scenes, but the only work we are aware of was demonstrated using objects that are easy to spot [14]. Moreover, the semantics is usually clear and it is either learned or manually labelled. In contrast, our objective is to investigate how to extract useful information from surveillance videos, in which *the semantics may be unclear, and the number and location of activities are unknown and can vary over time.*

Current solutions for dynamic visual scene analysis are mainly based on object detection and tracking. These solutions assume that video objects can be accurately segmented from the background and that the monitored scene characterised by clear semantics (events, behaviours etc). However, in many real-world scenarios, crowded scenes need to be analysed, thus limiting the usefulness of traditional representations. Moreover, in such scenes, the semantics is not necessarily clear; the meaning of *interesting event* or *anomalous behaviour* cannot be easily defined *a priori.* For these reasons, we have investigated a different direction.

The present invention is defined in the claims.

Some embodiments of the invention will now be described, by way of example, with reference to the accompanying drawings, in which:

Figure 1: Examples of dynamic scenes subject to analysis of this invention. Scenes may be crowded and the position of cameras is not necessarily favourable that renders well-studied image processing algorithms currently used in advanced video surveillance less useful.

Figure 2: The approach investigated can be considered as being between traditional motion-based analysis and object-based analysis.

Figure 3: Block diagram of the proposed analysis tool.

Figure 4: Analysis of scene changes in an AOI: (a) normalised amount of pixel changes over time between the current and the previous frame (green curve) and between the current and the reference frame (red curve); (b) instantaneous distribution of the intensities of the optical flow field; (c) instantaneous distribution of the directions of the optical flow field. These plots correspond to the surveillance scenes depicted in Figure 1 top and bottom, respectively.

Figure 5, 6 and 7: Example of areas of interest (AOI) used for the analysis of three test video sequences.

Figure 8: Examples of key-frames extracted from the indoor monitoring sequence 'Three interacting people'. It is possible to notice some redundancy in the choice of the key-frames.

Figure 9: Examples of key-frames extracted from the sequence 'TowerBridge - roadside'. It is possible to notice some false alarms due to strong shadows.

Figure 10: Examples of key-frames extracted from the sequence 'TowerBridge - pedestrians'.

Figure 11: Example of 'virtual magnetic loop' for vehicle counting in a traffic surveillance scenario with cameras placed in a favourable position. This picture shows how the proposed tool can be easily adapted to simpler scenes dynamics that those originally addressed. Picks in the graph correspond to passing vehicles over the 'virtual magnetic loop'.

Figure 12: Example of 'perspective virtual magnetic loop' for counting vehicles and for detecting vehicles driving in the opposite direction. This information can be derived from the shape of the curves, without the need of explicit computation of motion vectors.

We will now describe an algorithm that has been designed with a view to analysing very crowded dynamic visual scenes as well as scenes that are not easily characterised by explicit semantics. With these types of scene, the traditional object-centred analysis paradigm, relying on simultaneously tracking a large number of objects (e.g., surveillance in low-density scenes), will not work. On the other hand, a simple motion-based analysis approach depending on explicitly modelling of prior known events will not work either due to the fact that the scenes may not have well-defined semantics. The latter approach works in the situation, e.g., the detection of pedestrians walking in the wrong direction in a one-way subway tunnel, where the requirement (or semantics) is simple and explicit.

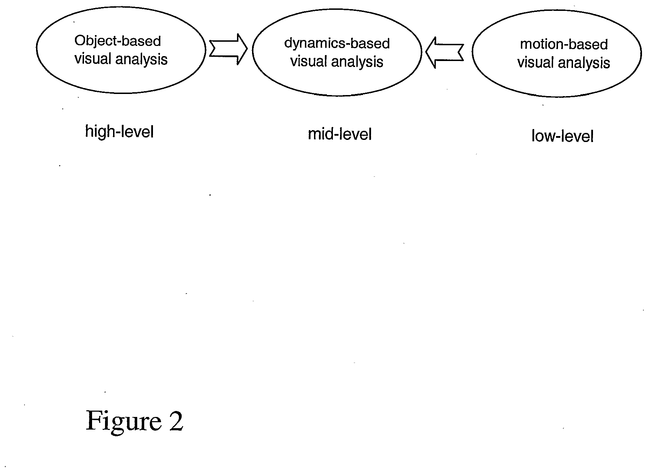

The investigated solution lies somehow in between the (*high-level*) object-based and (*low-level*) motion-based visual scene analysis. This solution is an *intermediate-level* analysis method, which uses certain forms of local area change information and low-level motion information to detect meaningful scene changes (Figure 2). Since the objective is to address complex and crowded scenes with a large number of concurrent objects, regions of significant temporal changes are first detected, and motion activity analysis is then performed on the detected regions. Temporal changes are identified through temporal segmentation, which classifies pixels within an area of interest into two classes, those moving and non-moving, by means of a process called change detection. Change detection is followed by 'motion activity' analysis, and, as the name suggests, it computes dynamic properties of the detected region in terms of the intensity and direction histograms of the motion vectors. Alternatively, the change detection and motion activity analysis may be carried out in parallel.

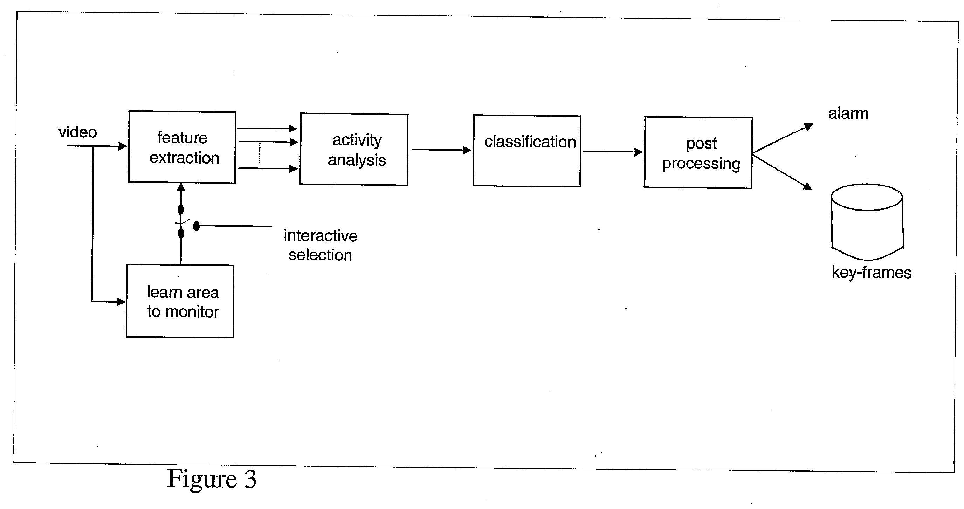

Figure 3 shows the block diagram of the proposed visual scene change / segmentation analysis system. We start with explaining the functionality of each block, and then proceed to discuss the implementation details of the features studied.

- **Area to monitor.** First, for each incoming video frame *t*, the 'moving' regions in areas of interest (AOIs), or spatial support, are detected; The AOIs can either be selected interactively on a GUI or set automatically based on accumulated motion information or a *priori* knowledge.

- **Feature extraction and analysis.** Two types of features are extracted for subsequent scene analysis, including the normalised amount of changed pixels inside an AOI of the current frame and the optical flow field This process is carried out separately for each AOI.

  (i) The normalised amount of changed pixels in the current frame is computed with respect to the previous frame and with respect to a reference frame, to be detailed in the section "Change detection". These two pieces of local area change information can be stored separately and visualised in the GUI with two profiles for easy feedback.

  (ii) The optical flow field is computed between two consecutive frames. Optical flow is the distribution of apparent velocities that can be associated with apparent motion. Apparent motion is what we consider as motion when analysing the temporal changes of the intensity function. The optical flow for each pixel is estimated by analysing the intensity functions of consecutive frame *t* and frame *t-1* using the Lucas & Kanade method presented in [13]. Using the computed optical flow field and the detected moving regions, motion activity features are then computed in terms of two normalised histograms of the optical flow motion vectors, one for intensity and the other for direction. And the intensity histogram is not uniformly quantised as explained shortly below.

- **Classification.** The classification is then based on empirical thresholds applied to the variations of motion activities, as discussed above. The classification step decides if the scene change is significant that an interesting video frames ('key frames') needs to be recorded or an alarm should be raised. Given the unconstrained scenes under analysis and the difficulty in defining a normal scene from an abnormal one commanding attention, the current system is based on neither a specific learning nor recognition method. But any prior knowledge if known can be helpful and easily incorporated. The details of the classification block are given later.

- **Post-processing.** A temporal post-processing step can be added to regularize the results of the classification and to remove redundant snapshots (key-frames). The post-processing is based on the assumption that an event of interest has a certain temporal extent and therefore one key-frame only should be produced for each event. A temporal threshold is used to this end.

**Change detection**

It should be noted that the expression "scene change" in this context should not be confused with scene changes occurring in post-production video material where cuts occur between shots from different cameras. For example, in broadcast programmes such as news, soaps or documentary that are shot from many angles by multiple cameras at many different settings, the rushes generated are then carefully edited by programme directors to produce a final product.

In such case, the scene change can be clearly defined as camera break (cut), or an abrupt change of estimated motion vector statistics. In the present context we are primarily concerned with the analysis (preferably in real time) of a video signal from a single camera. Real-world video is PASSIVELY captured by a surveillance camera which is fixed to monitor a particular site continuously, and the purpose is to detect any meaningful visual 'scene' (or activity) changes of the very same site. This scene change is not caused by camera movement but by movement of objects (pedestrians, vehicle traffic, crowds) within the actual field of view of the camera. There is also a need to deal with distracted environment changes such as those caused by moving clouds or background trees swings, etc., in an outdoor situation. Hence the scene change means different things in these two contexts, and in the latter case it will generally be a gradual change.

A surveillance scene change can be defined by evaluating the *temporal behaviour* of the features extracted from scene under study. The temporal behaviour can be analysed with respect to an *AOI* based on the value of a feature and its change over time. Note, however, that the *size of a feature* value by itself may not be important, for example, a truck, a car or a bike passing by should not trigger the system, unless it is required by particular applications (such as people counting, counting different types of vehicles, and so on). The *change of a feature* value is important: it carries information about the dynamics of the scene. For instance, a sudden change in the optical flow field inside an AOI could correspond to someone stopping abruptly or someone starting running. This event needs to trigger an alarm or to trigger the capture of a key-frame. In addition, an interesting scene change can also be defined in terms of *scene occupancy.*

In order to derive information on sudden scene changes, we compute the *slope* of the change detection curve. The change detection curve represents the number of pixels in an *AOI* undergoing change along the time. The *occupancy* of an AOI carries information about how crowded a scene is. Interesting events that correspond to scene changes are: empty to crowded, crowded to stopping, crowded to moving.

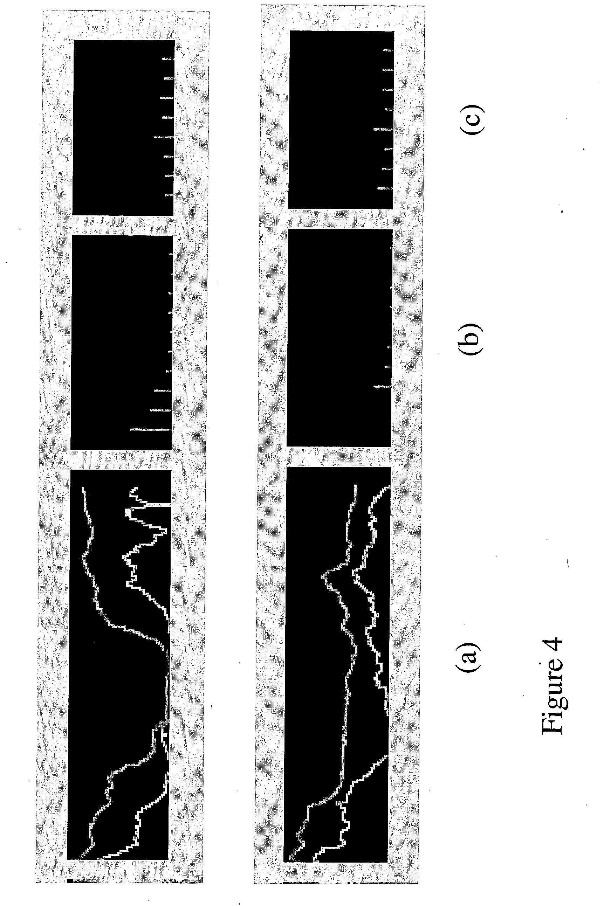

The requirements for change detection are two-fold: one being robustness against changes in illumination and, the other being simple to compute to allow for real-time applications. In this study, the change detection information of frame $t$ is computed by comparing it with the previous frame $t-1$ as well as a reference frame $t_0$ (Figure 4a). The AOIs are used to discount uninteresting parts of the scene. Thus we define

$N_R(t)$ is the normalised number of pixels that differ by more than a threshold from a reference frame that is adaptively updated so that it represents a picture of the background parts of the scene. This will include all fixed objects (including those temporarily obscure by foreground objects); it will, as it adapts, come to include objects which appear as foreground but remain stationary for so long that they are deemed part of the current background - for example a parked vehicle.

$N_P(t)$ is the normalised number of pixels that differ by more than a threshold from the immediately preceding frame.

Let $CD_R(t) = CD(t,t_0)$ be the change information at frame $t$ defined with respect to an adaptive reference background, and $CD_p(t)=CD(t,t\text{-}1)$ the change information at frame $t$ defined with respect to previous frame $t\text{-}1$. The change information is computed as thresholded pixel by pixel difference in the RGB colour space, and in the following, we focus on procedures for computing change information from $CD_p(t)$ as an example:

- The pixel by pixel difference is computed for each of the three image planes (R, G, and B). If, for a colour plane, the absolute difference for a pixel is less than a pre-defined threshold ($T_r$, $T_8$, or $T_b$), then the pixel for the colour plane is set to '0' (i.e. labelled as unchanged); whereas any difference that is greater than a threshold will generate a '1' label (i.e. the pixel has changed).

 Specifically, if the R,G, B pixel values in terms of Cartesian coordinates x,y in the image are r(x, y, t), g(x,y, t), and b(x,y, t), then masks $M_{rP}$, $M_{gP}$, $M_{bP}$ are 1 if the absolute pixel by pixel difference for each of the three image planes (R, G, and B). exceeds a pre-defined threshold ($T_r$, $T_g$, or $T_b$):

$$IF\ \left|r(x,y,t)-r(x,y,t-1)\right|>T_r\ then\ CD_{rP}(x,y,t)=1;\ otherwise\ CD_{rP}(x,y,t)=0$$

$$IF\ \left|g(x,y,t)-g(x,y,t-1)\right|>T_g\ then\ CD_{gP}(x,y,t)=1;\ otherwise\ CD_{gP}(x,y,t)=0$$

$$IF\ \left|b(x,y,t)-b(x,y,t-1)\right|>T_b\ then\ CD_{bP}(x,y,t)=1;\ otherwise\ CD_{bP}(x,y,t)=0$$

and a combined mask $CD_P$ is 1 if any colour has changed:

$$CD_P(x,y,t) = CD_{rP}(x,y,t) \vee CD_{gP}(x,y,t) \vee CD_{bP}(x,y,t)$$ using a logical OR operator.

using a logical OR operator.

- The results of the pixel by pixel difference of the three image planes are then fused using a logical OR operator. This process generates the binary mask $CD_p(t)$, which highlights the areas in the *AOI* of the current frame that have changed relative to the previous frame. Similar procedures can be applied to obtain $CD_R(t)$ mask relative to an adaptive reference mask.

The number of pixels contained by the two change masks are then normalised, respectively, with respect to the size of the *AOI,* thus obtaining $N_R(t)$ and $N_P(t)$.

The normalised number of pixels is then

$$N_P = \frac{1}{N}\sum_{AOI} CD_P(x,y,t)$$

where the sum is taken over all N pixels in the AOI.

The count $N_R$ of the changes relative to the reference frame is given by the same equations with suffix R instead of suffix P and $t_0$ instead of t-1.

**Classification: Change**

The profiles of $N_R(t)$ and $N_P(t)$ over time provide useful information to detect interesting scene changes.

- If both $N_R(t)$ and $N_P(t)$ are small, then the *scene is empty.* This can be translated into the following condition:

$$N_R(t) < T1 \text{ AND } N_P(t) < T2 \tag{1}$$

- If $N_R(t)$ is similar to $N_R(t-1)$ and $N_P(t)$ differs from $N_P(t-1)$ or is large, then the *content of the scene is moving.* This can be translated into the following condition:

$$N_R(t) = N_R(t-1) \text{ AND } (N_P(t) > T3 \text{ OR } N_P(t) \neq N_P(t-1)) \tag{2}$$

In the second case, when $N_P(t) \neq N_P(t-1)$, then the *content of the scene is accelerating or decelerating.*

- If $N_R(t)$ is similar to $N_R(t-1)$ and $N_P(t)$ is small, then the *content of the scene is still or the scene is full (crowded).* This can be translated into the following condition:

$$N_R(t) = N_R(t-1) \text{ AND } N_P(t) < T4 \tag{3}$$

**Motion feature analysis**

The above analysis on change detection is not discriminative enough to single out a meaningful scene change, as it offers no explanation as to whether or not objects present in the scene (e.g., a crowd or individual persons / vehicles) change their moving directions, and if so, in what way and how intense they are. To explore this, motion features are computed from optical flow field estimation. Optical flow is a method for determining for each pixel x,y an estimate of the vector velocity (u,v) of that pixel. This is a well know technique, proposed by Lucas and Kanade [13] and others, and today a computer implementation can be obtained using a standard library routine such as that offered by Intel's open-source Computer Vision Library. The following extract is a reference to use the function:

**CalcOpticalFlowLK**

***Calculates optical flow for two images***

```
void cvCalcOpticalFlowLK( const CvArr* imgA, const CvArr* imgB, CvSize winSize,
          CvArr* velx, CvArr* vely);
imgA
First image, 8-bit, single-channel.
imgB
Second image, 8-bit, single-channel.
winSize
Size of the averaging window used for grouping pixels.
velx
Horizontal component of the optical flow of the same size as input images, 32-bit
floating-point, single-channel.
vely
Vertical component of the optical flow of the same size as input images, 32-bit
floating-point, single-channel.
```

The function cvCalcOpticalFlowLK computes flow for every pixel of the first input image using Lucas & Kanade algorithm.

As stated before, to reduce the effect of noise and speed up computation, only the motion fields in areas where a change has been detected are considered. Rather than the components u, v, we prefer to use the magnitude and direction $b_m$. bp:

$$m = \sqrt{(u^2+v^2)} \text{ and p is the angle for which } m \cos p = u \text{ and } m \sin p = v$$

and p is the angle for which m cos p = u and m sin p = v

These are then represented in each area by an intensity and direction histogram, allowing for consideration of both direction and speed changes.

The values obtained for m and p are quantised into k and q bins respectively. The number of readings in each range is counted to give a histogram:

The intensity range of the optical flow field is divided into non-uniform quantisation levels. The levels can be changed if more information is available about the statistical distribution of the motion vectors underlying the semantics of the scene. Low values of intensity, e.g., those less than $\sqrt{5}$, are discarded, since they do not carry significant information. Let $H_m(t)$ be the motion intensity histogram:

$$H_m(t) = [b_{m,1}(t), b_{m,2}(t), \cdots b_{m,k}(t)] \tag{5}$$

An example of bin distribution for *k=10* (n.b. according to *squared* value of the intensity) can be: [5, 10]; [10, 20]; [20, 40]; [40,60]; [60, 80]; [80, 100]; [100, 150]; [150, 200]; [200, 250]; [250, ....].

The direction histogram of the optical flow field is quantised into uniform bins, though it is possible to have a non-uniform quantisation if some *a priori* knowledge is available. Let $H_p(t)$ be the direction histogram:

$$H_p(t) = [b_{p,1}(t), b_{p,2}(t), \cdots b_{p,q}(t)] \tag{6}$$

For example, a *q= 8* level quantisation will lead to bins being placed at regular intervals of 45° each.

To make use of the temporal variation of the motion feature, we compute the distance between two consecutive histograms. The distance D is computed for the intensity histogram as,

$$D(H_m(t), H_m(t-1)) = \frac{1}{k}\sum_{i=1}^{k}\frac{\left|b_{m,i}(t)-b_{m,i}(t-1)\right|}{b_{m,i}(t)+b_{m,i}(t-1)}, \qquad (7)$$

with the sum running through all the k bins. And similarly, for the direction histogram,

$$D(H_p(t), H_p(t-1)) = \frac{1}{q}\sum_{i=1}^{q}\frac{\left|b_{p,i}(t)-b_{p,i}(t-1)\right|}{b_{p,i}(t)+b_{p,i}(t-1)}, \qquad (8)$$

with the sum running through all the q bins.

**Classification: Motion/Combined**

The information about changes in motion activity can be exploited to understand if there is a change in speed or a change in direction. In both cases thresholds are determined to define the amount of change that is considered relevant, corresponding to interesting events.

Note that we prefer to make the following tests conditional upon the change analysis indicating that the number of moving pixels in an AOI is larger than a threshold.

If the distance between the intensity histograms is large, then there is a *change in speed.* For instance, someone started running, or stopped. This can be translated into the following condition:

$$D(H_m(t), H_m(t-1)) > TH_1 \qquad (9)$$

If the distance between the direction histograms is large, then a relevant *change of direction* took place in the content of the scene. This can be translated into the following condition:

$$D(H_p(t), H_p(t-1)) > TH_2 \qquad (10)$$

The changes in motion activity are considered only when the number of moving pixels in an AOI is larger than a threshold:

$$N_R(t) > TH_3 \qquad (11)$$

**Classification**

The result of the above operations is that the scene is categorised as one or more of:

*scene is empty* (Eq. 1);

*content of the scene is moving* (Eq. 2);

*content of the scene is still or the scene is full (crowded)* (Eq. 3);

*content of the scene is accelerating or decelerating* (Eq. 2 with $N_P(t) \neq N_P(t-1)$);

*change in speed.* (Eq. 9 AND Eq. 11);

*change of direction* (Eq. 10 AND Eq. 11).

The next stage of classification is to identify scene changes. In this embodiment, a frame whose categorisation according to these six headings is different from the categorisation of the preceding frame is deemed to indicate a scene change. Thus, the interesting parts of the sequences are characterised by changes between these classes.

There are various ways the key frames, or representative frames, are extracted, once the scene changes are detected. Normally we choose the mid-frame between two scene changes. This is rather like the way in dealing with production video (e.g., news, feature films etc) analysis in which we choose a key frame to represent the visual content of each detected shot. Alternatively, *when a scene change* as *discussed previously is detected, then the very frame at this instant is stored as the key frame.*

**Post-processing**

The results obtained with the classification method described above may contain more alarms/key frames than desired due to the temporal proximity of single events, which belong to the same semantic event (e.g. the same scene change). For this reason, a temporal threshold can be used to discard key-frames (or alarms) that are close to each other. The value of the temporal threshold is domain dependent and can be in the range of 1-2 seconds in the case of a camera monitoring a street or in the range of 5-10 seconds in the case of a camera monitoring a pedestrian path. This criterion simply does not allow an alarm to be generated or a key-frame to be recorded n seconds after the previous alarm or key-frame.

In a more sophisticated implementation, we also introduce a temporal threshold $T_I$ to specify that the final key-frames are at least $T_I$ frames apart, where the value of $T_I$ is dependent on the scenario under study (e.g. expected object speed). For example, a smaller threshold is to be used when monitoring car traffic (e.g., $T_I$ =50 frames, or 2 seconds) and a larger threshold when monitoring pedestrians (e.g. $T_I$ =250 frames, or 10 seconds). After a scene change is detected, no additional key-frames, if any, are to be stored within the time interval equal to the temporal threshold.

**Experimental studies**

We present here sample detection and classification results on rapidly changing crowded visual scenes obtained with the proposed dynamic visual scene analysis tool. In addition, we also provide examples of further use of the analysis tool in traditional surveillance tasks.

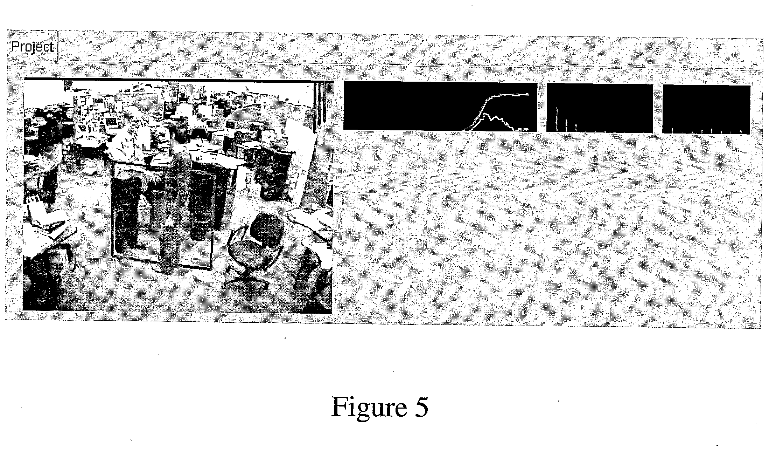

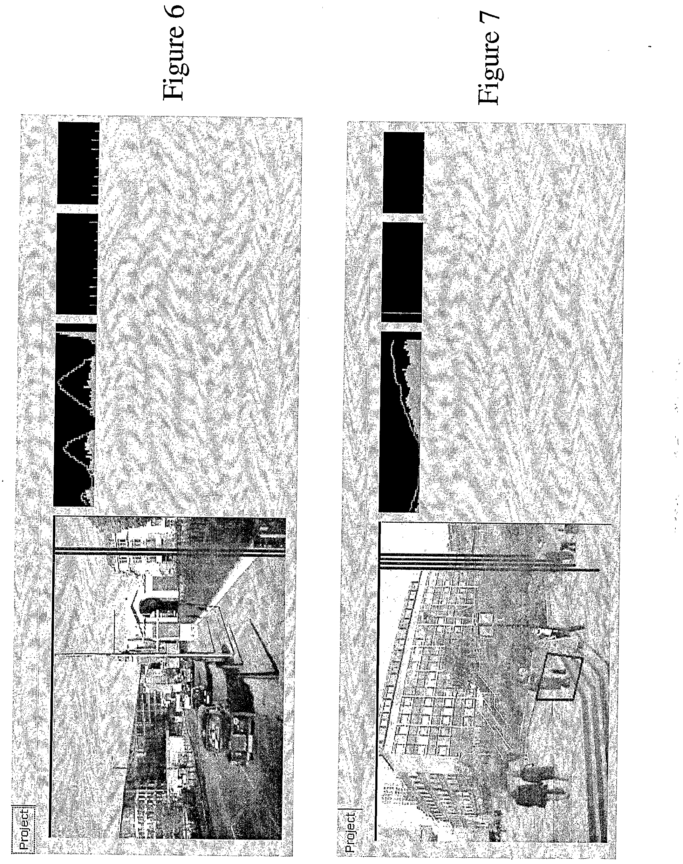

Let us consider the visual scene shown in Figures 5 to 7, where the spatial supports (areas of interest) are marked, respectively, with a red polygon. The vertical red lines are showed in the GUI to visualise

- the temporal differences of the normalised amount of pixel changes in consecutive frames, or $N_R(t) - N_R(t-1)$ and $N_P(t) - N_P(t-1)$, respectively;

- the distance of the intensity histograms and of the direction histograms of the optical flow filed in consecutive frames (Eq. (7) and Eq. (8), respectively.

The longer is a line as depicted, the larger is the difference.

Recall that in the previous discussion of the scene analysis toolset, a few thresholds are needed to make necessary detection and classification decisions. In our studies, the values of the thresholds are decided empirically, based on tests on a small representative data set. It is worth noting that the same thresholds values have been used for the different sequences studied, and they do not affect the results in an appreciable way. In the case of change detection, the threshold used for the pixel by pixel difference for each of the RGB plane is set at the same value, or $T_r = T_g = T_b$ = 10 (assuming that these quantities range from 0 to 255); $TH_1$ = 0.4, $TH_2$ = 0.3 ; $TH_3$=10% of the size of the AOI.

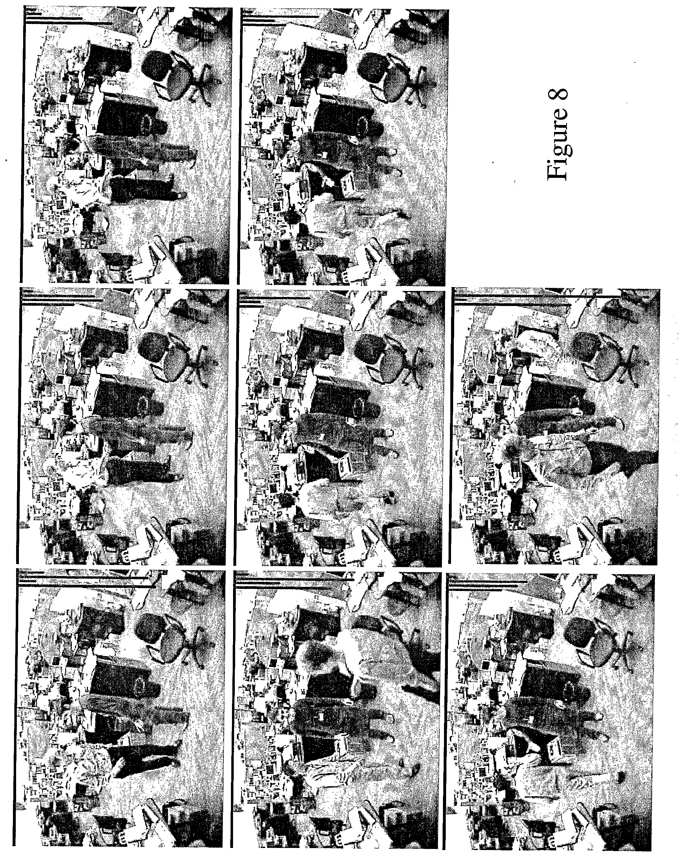

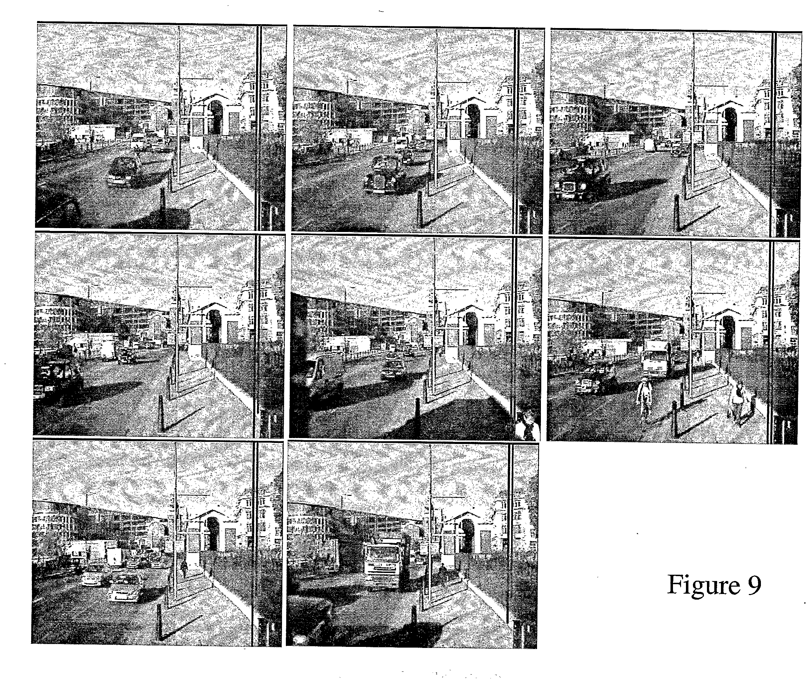

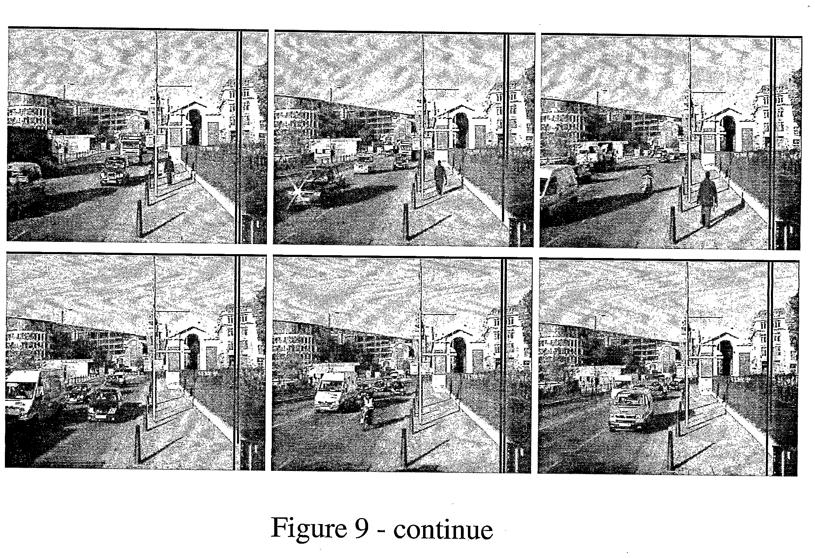

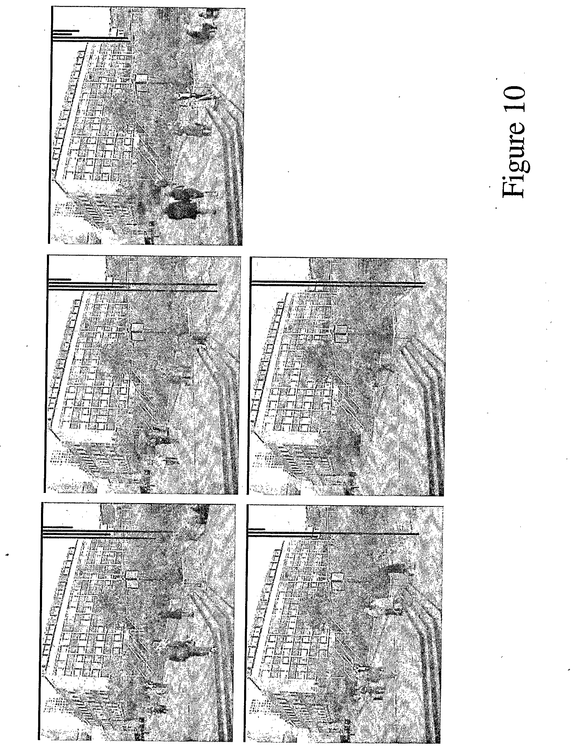

The results presented in Figures 8, 9 and 10 show examples of key-frame that represent meaningful surveillance scene changes in three different scenarios. The key-frames are automatically extracted based on the analysis tool and correspond to the summarisation of the corresponding surveillance video. In Figure 8, indoor office surveillance changes are detected and the key-frames represent interesting interactions between several persons. It is possible to notice some redundancy in the selected key-frames. These redundancies can be eliminated by using similarity measures based on colour and texture between key-frames. Moreover, in Figure 9, a busy traffic scene is monitored; it is possible to notice that some false positives are included due to very strong shadow on the areas of interest. In Figure 10, an open space next to a subway station entrance is being examined; the lower camera viewing angle, unconstrained entry and exit points, and people grouping and splitting in the scene are the major challenges.

In constrained scene, such as for traffic surveillance, the proposed system can also be used to provide additional functionalities. Besides the detection of surveillance scene changes, an application enabled by the proposed analysis tool is monitoring traffic conditions and collecting snapshots of all vehicles passing in a favourable position in the scope of the camera. The former application provides information about traffic density (high/medium/low/still) that could be used for planning based on the collection of statistics over long periods of time as well as for generating alarms in case of accidents or anomalous traffic conditions. The latter would enable the generation of a database of vehicles that can be used to speed up the search of a specific vehicle through query-by-content (colour, size, licence plate) or by time.

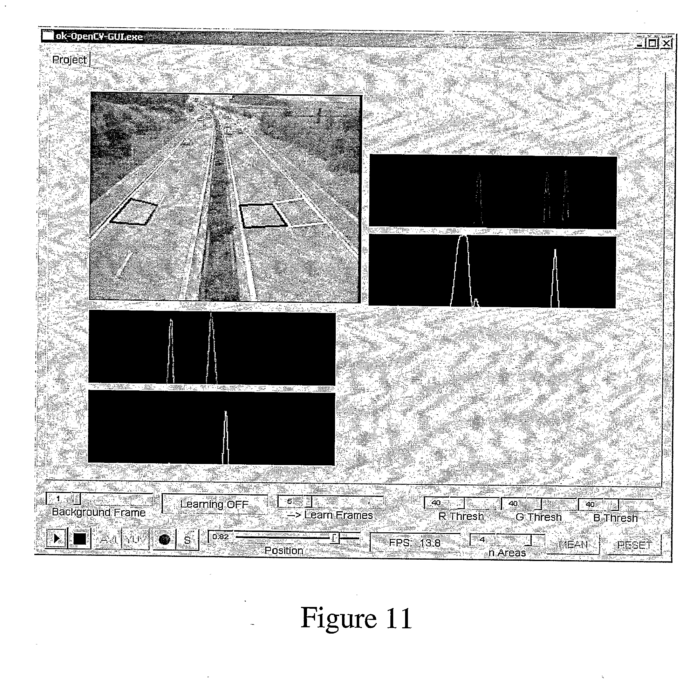

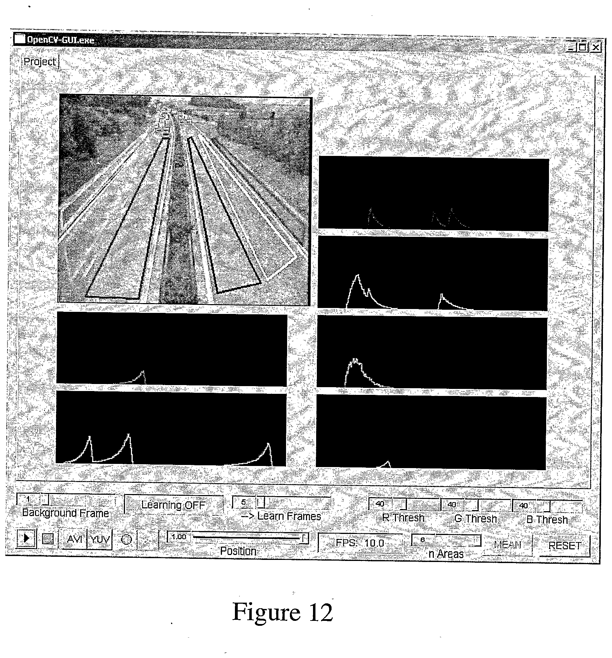

For instance, the tool can automatically count the number of vehicles (Figure 11) and detect if a vehicle is driving in the opposite direction based on change detection information only (Figure 12). The advantage of this approach is that the a priori information about the scene layout allows us to use change detection information without computing motion vectors.

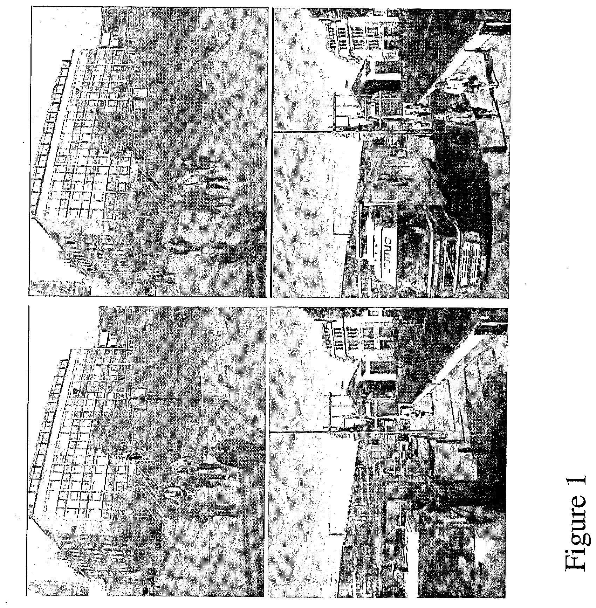

In this example, we have presented a video-based analysis framework for identifying scene activity changes without explicitly relying on clearly defined semantics. Especially, the video data under study represent high-density dynamic scenes with substantial total or partial occlusions and frequently changing lighting conditions on both global (e.g., caused by floating clouds) and local (e.g., cast shadows) scales. The objective is to address issues beyond traditional surveillance video camera scenarios, or cameras mounted on top of high poles to provide a bird's-eye view of the scene [10][12], rather the cameras are mounted at some different and atypical positions (e.g., on top of a phone booth) due to the site constraints, thus having a relatively low position with respect to the ground (see Figure 1). This is an unfavourable position for a camera to monitor a scene, especially when it becomes crowded, giving rise to a large number of occlusions. The position of the cameras is somewhere in between that of common surveillance cameras and that of cameras used to capture the number plate of vehicles at the entrance of bridges or highways (The positioning is therefore more similar to that of cameras in "smart rooms," in which a number of participants is present in a constrained space). Given the nature of this kind of scenes and possible lack of semantics, the proposed solution does not make explicit use of example-based scene change training, thus allowing for detection of unknown and unpredictable scene changes. The algorithms are simple to compute, offering gains in both robustness and flexibility. The proposed framework can be easily adapted to scenarios where some semantics are explicit and can also be used for simpler problems like object counting, queue measurement, and intruder detection.

Thus, we propose a robust temporal segmentation algorithm for dynamic visual scene analysis and surveillance scene change detection. The proposed algorithm uses neither tracking nor object-based representation for scene analysis, and it especially targets at characterising crowded scenes. Moreover, the algorithm leads to a useful representation of a video in terms of *activity* and *activity changes* without using semantics. Such a representation enables automatic scene description and detection of relevant events. The algorithm is based on estimating *local area changes and motion information* in consecutive video frames and their temporal differences. Local area changes are computed by differencing the current frame from the previous frame as well as a reference background frame; local motion information is described by means of motion intensity and direction histograms coming from an optical motion field. The proposed system is scalable and can be adapted to tackle simpler problems like object counting, queue measurement, intruder detection in unauthorised areas.

**References:**

1. H. Zhong, J. Shi, M. Visontai, "Detecting unusual activity in video," in Proc. of IEEE Conference on Vision and Pattern Recognition (CVPR 2004), Washington DC, USA, June-July 2004.

2. A. Amer, E. Dubois, A. Mitiche, "Context-independent real-time event recognition: application to key-image extraction," in Proc. of ICPR 2002, Quebec, Canada, August 2002.

3. A. Cavallaro and T. Ebrahimi, "Change detection based on color edges," in Proc. of International Symposium on Circuits and Systems (ISCAS-2001), Sydney, Australia, May 2001.

4. D. DeMenthon, D. Doermann, "Video Retrieval using Spatio-Temporal Descriptors," Proc. of ACM Multimedia 2003, Berkeley, CA, USA, November 2003.

5. A. Graves and S. Gong, "Spotting scene change for indexing surveillance video," Proc. of BMVC 2003.

6. A G. Hauptmann, J. Gao, R. Yan, Y. Qi, J. Yang, and H. D. Wactlar, "Automated analysis of nursing home observations," IEEE Pervasive Computing, Apr-June 2004.

7. A. Mittal and L.S. Davis, "M2Tracker: a multi-view approach to segmenting and tracking people in cluttered scenes using region-based stereo," Proc. of ECCV 2002.

8. J. Ng and S. Gong, "Learning pixel-wise signal energy for understanding semantics," Proc. of BMVC, 2001, pp. 695-704.

9. E. Stringa and C. S. Regazzoni, "Real-time video-shot detection for scene surveillance applications," IEEE Trans. on Image Processing, 2000.

10. www.visualsurveillance.org, last accessed December 2004.

11. T. Xiang, S. Gong and D. Parkinson, "Autonomous visual events detection and classification without explicit object-centred segmentation and tracking," Proc. of BMVC 2002.

12. Zhao and R. Nevatia, "Tracking multiple humans in complex situations," IEEE Trans. on Pattern Analysis and Machine Intelligence, 26(9), September 2004, pp.1208-1221.

13. B. Lucas, T. Kanade, "An iterative image registration technique with an application to stereo vision," Proc. of 7th International Joint Conference on Artificial Intelligence, 1981, pp. 674-679.
14. Valestin, oral presentation at EWIMT 2004

**Claims**

1. A method of detecting events in a sequence of video frames received from a static surveillance camera, the method comprising:

   - deriving for each frame a plurality of parameters, said parameters including

      (a) at least one parameter that is a function of the difference between picture elements of that frame and correspondingly positioned picture elements of a reference frame; and
      (b) at least one parameter that is a function of the difference between picture elements of that frame and correspondingly positioned picture elements of a <u>preceding</u> frame; and
      (c) at least one parameter that is a function of the difference between estimated velocities of picture elements of that frame and the estimated velocities of the correspondingly positioned elements of the preceding frame;

   based on said parameters, assigning to each frame one or more of a plurality of predetermined classifications, each classification relating to a type of scene activity represented in the frame; and
   identifying frames at which changes occur in said classification assignment so as to determine a significant event.

2. A method according to claim 1, including the preliminary step of identifying within the image represented by the signal, one or more areas of interest, and performing analysis only in respect of that area or those areas.

3. A method according to claim 2, including, when there are a plurality of areas of interest, performing said derivation and assignment separately in respect of each area.

4. A method according to any one of claims 1 to 3 in which one parameter is the number of picture elements that differ to more than a defined degree from the reference frame.

5. A method according to any one of the preceding claims in which one parameter is the number of picture elements that differ to more than a defined degree from the preceding frame.

6. A method according to any one of the preceding claims in which the estimated velocities are computed using an optical flow method.

**Patentansprüche**

1. Verfahren zur Erfassung von Ereignissen in einer Sequenz von Video-Frames, die von einer ortsfesten Überwachungscamera empfangen werden, wobei das Verfahren umfasst:

   - Ableiten einer Vielzahl von Parametern für jeden Frame, wobei die Parameter umfassen:

      (a) mindestens einen Parameter, der eine Funktion des Unterschieds zwischen Bildelementen des Frames und entsprechend positionierten Bildelementen eines Bezugs-Frames ist,
      und
      (b) mindestens einen Parameter, der eine Funktion des Unterschieds zwischen Bildelementen des Frames und entsprechend positionierten Bildelementen eines vorhergehenden Frames ist,
      und
      (c) mindestens einen Parameter, der eine Funktion des Unterschieds zwischen geschätzten Geschwindigkeiten von Bildelementen des Frames und den geschätzten Geschwindigkeiten der entsprechend positionierten Elemente des vorhergehenden Frames ist,

   - auf der Basis der genannten Parameter Zuordnen einer vorgegebenen Klassifizierung oder mehrerer vorgegebener Klassifizierungen einer Vielzahl von vorgegebenen Klassifizierungen zu jedem Frame, wobei sich jede Klassifizierung auf einen Typ von in dem Frame dargestellter Szenen-Aktivität bezieht,

und

- Identifizieren von Frames, bei denen Änderungen in der Klassifizierungs-Zuordnung auftreten, um ein signifikantes Ereignis zu ermitteln.

**2.** Verfahren nach Anspruch 1, das den folgenden vorausgehenden Schritt umfasst: Identifizieren eines interessierenden Bereichs oder mehrerer interessierender Bereiche innerhalb des durch das Signal dargestellten Bildes und Durchführen einer Analyse lediglich in Bezug auf diesen Bereich oder diese Bereiche.

**3.** Verfahren nach Anspruch 2, das, wenn eine Vielzahl von interessierenden Bereichen vorliegt, die separate Durchführung des Ableitens und des Zuordnens in Bezug auf jeden Bereich beinhaltet.

**4.** Verfahren nach einem der Ansprüche 1 bis 3, bei dem ein Parameter die Anzahl von Bildelementen ist, die sich um mehr als ein definiertes Maß von dem Bezugs-Frame unterscheiden.

**5.** Verfahren nach einem der vorhergehenden Ansprüche, bei dem ein Parameter die Anzahl von Bildelementen ist, die sich um mehr als ein definiertes Maß von dem vorhergehenden Frame unterscheiden.

**6.** Verfahren nach einem der vorhergehenden Ansprüche, bei dem die geschätzten Geschwindigkeiten unter Anwendung eines Verfahrens des optischen Flusses berechnet werden.

**Revendications**

**1.** Procédé de détection d'événements dans une séquence de trames vidéo reçues d'une caméra de surveillance statique, le procédé comprenant :

- la dérivation pour chaque trame d'une pluralité de paramètres, lesdits paramètres incluant

(a) au moins un paramètre qui est une fonction de la différence entre des éléments d'image de cette trame et des éléments d'image positionnés de manière correspondante d'une trame de référence ; et
(b) au moins un paramètre qui est une fonction de la différence entre des éléments d'image de cette trame et des éléments d'image positionnés de manière correspondante d'une trame précédente ; et
(c) au moins un paramètre qui est une fonction de la différence entre des vitesses estimées d'éléments d'image de cette trame et les vitesses estimées des éléments positionnés de manière correspondante de la trame précédente ;

sur la base desdits paramètres, l'affectation à chaque trame d'une ou plusieurs d'une pluralité de classifications prédéterminées, chaque classification se rapportant à un type d'activité de scène représentée dans la trame ; et l'identification de trames dans lesquelles des changements surviennent dans ladite affectation de classifications de manière à déterminer un événement significatif.

**2.** Procédé selon la revendication 1, incluant l'étape préliminaire d'identification, à l'intérieur de l'image représentée par le signal, d'une ou plusieurs zone(s) d'intérêt, et d'exécution d'une analyse uniquement pour ce qui concerne cette zone ou ces zones.

**3.** Procédé selon la revendication 2, incluant, lorsqu'il y a une pluralité de zones d'intérêt, l'exécution de ladite dérivation et de ladite affectation séparément pour ce qui concerne chaque zone.

**4.** Procédé selon l'une quelconque des revendications 1 à 3 dans lequel un paramètre est le nombre d'éléments d'image qui diffèrent de plus d'un degré défini par rapport à la trame de référence.

**5.** Procédé selon l'une quelconque des revendications précédentes dans lequel un paramètre est le nombre d'éléments d'image qui diffèrent de plus d'un degré défini par rapport à la trame précédente.

**6.** Procédé selon l'une quelconque des revendications précédentes dans lequel les vitesses estimées sont calculées en utilisant un procédé en flux optique.

Figure 1

Figure 2

Figure 3

(a)                    (b)                    (c)

Figure 4

Figure 5

Project

Figure 6

Project

Figure 7

EP 1 974 326 B1

Figure 8

Figure 9

Figure 9 - continue

Figure 10

Figure 11

Figure 12

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 03001467 A

### Non-patent literature cited in the description

- **H. ZHONG ; J. SHI ; M. VISONTAI.** Detecting unusual activity in video. *Proc. of IEEE Conference on Vision and Pattern Recognition (CVPR 2004),* June 2004
- **A. AMER ; E. DUBOIS ; A. MITICHE.** Context-independent real-time event recognition: application to key-image extraction. *Proc. of ICPR,* August 2002
- **A. CAVALLARO ; T. EBRAHIMI.** Change detection based on color edges. *Proc. of International Symposium on Circuits and Systems (ISCAS-2001),* May 2001
- **D. DEMENTHON ; D. DOERMANN.** Video Retrieval using Spatio-Temporal Descriptors. *Proc. of ACM Multimedia 2003,* November 2003
- **A. GRAVES ; S. GONG.** Spotting scene change for indexing surveillance video. *Proc. of BMVC,* 2003
- **A G. HAUPTMANN ; J. GAO ; R. YAN ; Y. QI ; J. YANG ; H. D. WACTLAR.** Automated analysis of nursing home observations. *IEEE Pervasive Computing,* 20040400
- **A. MITTAL ; L.S. DAVIS.** M2Tracker: a multi-view approach to segmenting and tracking people in cluttered scenes using region-based stereo. *Proc. of ECCV,* 2002
- **J. NG ; S. GONG.** Learning pixel-wise signal energy for understanding semantics. *Proc. of BMVC,* 2001, 695-704
- **E. STRINGA ; C. S. REGAZZONI.** Real-time video-shot detection for scene surveillance applications. *IEEE Trans. on Image Processing,* 2000
- **T. XIANG ; S. GONG ; D. PARKINSON.** Autonomous visual events detection and classification without explicit object-centred segmentation and tracking. *Proc. of BMVC,* 2002
- **ZHAO ; R. NEVATIA.** Tracking multiple humans in complex situations. *IEEE Trans. on Pattern Analysis and Machine Intelligence,* September 2004, vol. 26 (9), 1208-1221
- **B. LUCAS ; T. KANADE.** An iterative image registration technique with an application to stereo vision. *Proc. of 7th International Joint Conference on Artificial Intelligence,* 1981, 674-679